# EUROPÄISCHE PATENTSCHRIFT

(11) **EP 0 658 330 B1**
(45) Veröffentlichungstag und Bekanntmachung des Hinweises auf die Patenterteilung: **22.04.1998**
(21) Anmeldenummer: 94810729.7
(22) Anmeldetag: 14.12.1994
(51) Int. Cl.: A47J 31/60

(54) **Verfahren und Anordnung zur Reinigung einer Brühvorrichtung, insbesondere einer Kaffeemaschine**
Method and device for cleaning a brewing apparatus, esp. a coffee brewer
Procédé et appareil à nettoyer une machine à boisson chaude, notamment une machine à café

(30) Priorität: 15.12.1993 CH 3752/93
(43) Veröffentlichungstag der Anmeldung: 21.06.1995
(73) Patentinhaber: JURA ELEKTROAPPARATE AG, CH-4626 Niederbuchsiten (CH)
(72) Erfinder: Reyhanloo, Shahryar, CH-2540 Grenchen (CH); Hermann, Markus, CH-4710 Balsthal (CH); Anliker, Markus, CH-5722 Gränichen (CH)
(74) Vertreter: Tschudi, Lorenz

(56) Entgegenhaltungen:
- EP-A- 0 173 651
- CH-A- 665 945
- DE-A- 3 316 157
- US-A- 3 038 492
- US-A- 4 305 328

## Beschreibung

Die vorliegende Erfindung bezieht sich auf ein Verfahren zur Reinigung einer Brühvorrichtung, insbesondere einer Kaffeemaschine, gemäss dem Oberbegriff des Patentanspruches 1 sowie auf eine Anordnung zur Reinigung einer Brühvorrichtung, insbesondere einer Kaffeemaschine gemäss dem Oberbegriff des patentanspruches 9.

Aus der europäischen Patentschrift 0 154 206 ist eine Vorrichtung zur Zubereitung von Heissgetränken, insbesondere von Kaffee, bekannt, welche Baugruppenträger aufweist, die die einer Verschmutzung durch das Getränkepulver bzw. durch das zubereitete Getränk unterworfenen Teile aufnehmen, welche Baugruppenträger zur Reinigung der Teile aus der Kaffeemaschine entfernt und extern gereinigt werden. Aus der US-Patentschrift 3 038 492 ist eine Kaffeemaschine bekannt, bei welcher ein Kolben den Kaffeesatz in Richtung auf ein Ausgabeorgan zu bewegt, wobei der Wasserfluss zum Ausspülen des Kaffeesatzes aus dem Zylinder aufrechterhalten wird. Bei dieser bekannten Vorrichtung können nicht alle durch den Kaffeesatz oder den Kaffee verunreinigten Teile durch Wasser von einem Wasserbehälter oder Wasseranschluss gereinigt werden, von dem auch Wasser zur Herstellung von Kaffee verwendet wird. Es ist eine Aufgabe der vorliegenden Erfindung, eine Kaffeemaschine zu schaffen, bei welcher die durch den Kaffee resp. durch den Kaffeetrester verunreinigten Teile in der Maschine selbst gereinigt werden können und zwar mit Wasser von demselben Wasserbehälter oder Wasseranschluss, von dem auch Wasser für die Zubereitung des Kaffees verwendet wird. Dies wird erfindungsgemäss beim Verfahren durch die kennzeichnenden Merkmale des Patentanspruches 1 und bei der Anordnung durch die kennzeichnenden Merkmale des Patentanspruches 9 erzielt.

Bevorzugte Ausführungsformen ergeben sich aus den abhängigen Ansprüchen.

Im folgenden wird anhand der beiliegenden Zeichnung ein Ausführungsbeispiel der Erfindung sowie dessen Verwendung näher beschrieben. Es zeigen
- **Fig**. **1**: eine schematische Darstellung einer Kaffeemaschine mit den einzelnen Bauteilen,
- **Fig. 2**: die Brühvorrichtung der Kaffeemaschine in der Spülposition,
- **Fig. 3**: die Brühvorrichtung der Kaffeemaschine in der Reinigungsposition,
- **Fig. 4**: die Brühvorrichtung der Kaffeemaschine in der Flutposition,
- **Fig. 5**: eine Draufsicht auf die Brühkammer mit den Spül-und Reinigungskanälen.

Die Kaffeemaschine 1 umfasst ein Gehäuse 2 mit den darin angeordneten Bauteilen, nämlich als zentraler Modul die Brühvorrichtung 3, einen Kaffeebohnenbehälter mit Mahlwerk 4, einen darunter angeordneten Trichter 5 für das gemahlene Kaffeepulver, einen Wasserbehälter 6, einen Durchlauferhitzer 7, eine Pumpe 8, einen Kaffeeauslauf 9, einen Tresterbehälter 10 sowie eine Auffangschale 11 für das Reinigungswasser. Im weiteren ist eine Bedienungseinheit 12 zur Steuerung der Arbeitsabläufe der Kaffeemaschine vorgesehen. Ziel des Reinigungsvorganges ist die Reinigung der vom Kaffee sowie vom Kaffeetrester verunreinigten Teile der Kaffeemaschine, von denen die meisten in der Brühvorrichtung 3 angeordnet sind. Bezüglich der Funktionsweise der Brühvorrichtung 3 wird auf die Schweizer Patentanmeldung 639/92-6 verwiesen. Sowohl das Brühwasser als auch das Reinigungswasser wird vom Wasserbehälter 6 durch die Pumpe 8 über den Durchlauferhitzer 7 zum Wasseranschluss 13 am Brühzylinder 14 gefördert. Für den Reinigungs- und Spülvorgang der Brühvorrichtung 3 wird also Wasser vom gleichen Wasserbehälter 6 wie für die Zubereitung des Kaffees verwendet. Ein erster Ansatzteil 15 des Brühzylinders 14 deckt in der gezeigten Stellung des Brühzylinders das untere Ausgabeende des Trichters 5 ab. Ein zweiter Ansatzteil 16 am Brühzylinder 14 dient als Gleitbahn zur Beförderung des aus dem Brühzylinder ausgestossenen Tresters in den Tresterbehälter 10. Der gefüllte Tresterbehälter 10 wird jeweils vor der Reinigungsprozedur geleert.

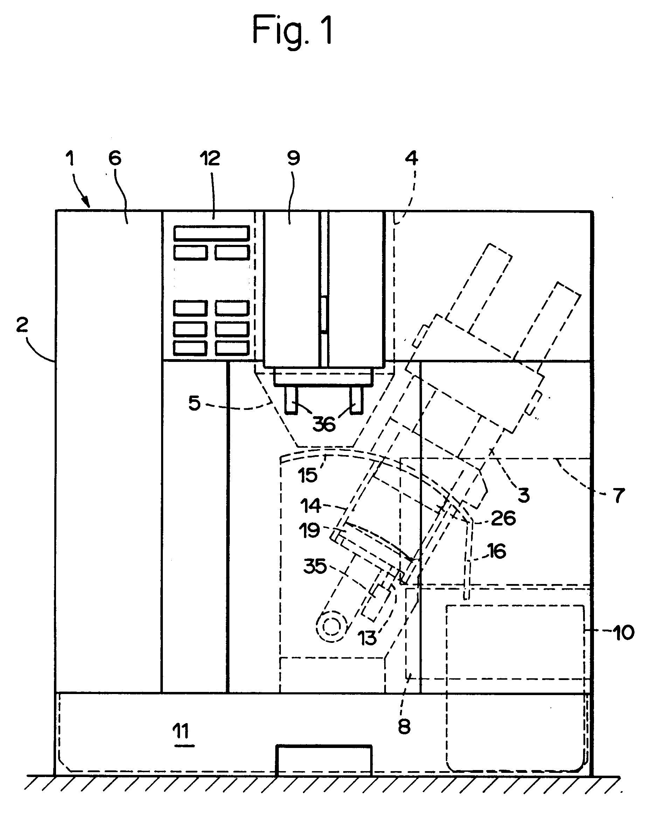

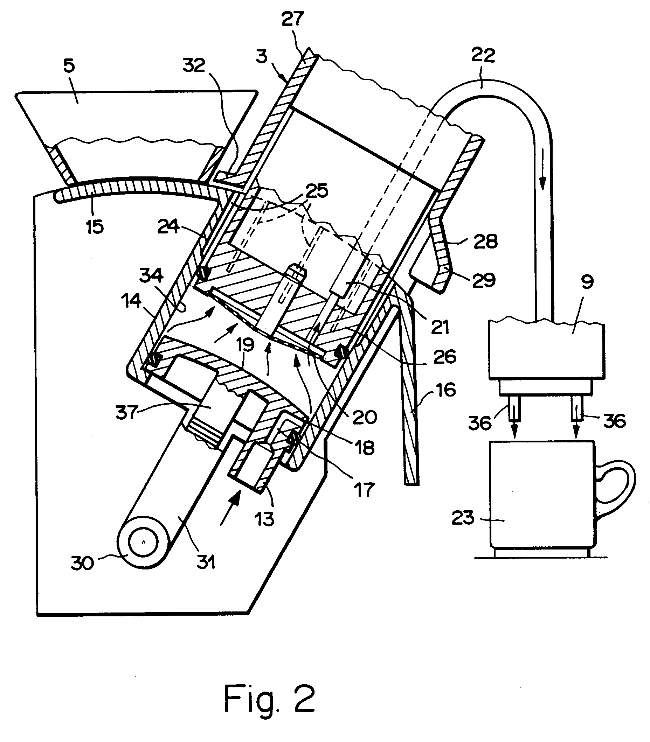

In Fig. 2 ist die Spülposition dargestellt. Das durch den Wasseranschluss 13 eintretende Spülwasser tritt durch einen Kanal 17 in den äusseren Ringbereich 18 des Ausstosskolbens 19, weiter durch die Siebplatte 20 in das Abflussrohr 21 und durch die Abflussleitung 22 und den Kaffeeauslauf 9 mit den Abflussrohren 36 zu einem externen Wasserbehälter 23. Bei dieser ersten Reinigungsphase findet eine Spülung der der Verschmutzung ausgesetzten Teile, nämlich des Ausstosskolbens 19, des unteren Bereiches des Brühzylinders, d.h. der Brühkammer, der Siebplatte 20 am Brühkolben 26, des Abflussrohres 21, der Abflussleitung 22, sowie des Kaffeeauslaufes 9 statt. Das Spülwasser nimmt in dieser Phase den Weg des Brühwassers resp. des gebrühten Kaffees. In der Wand 24 des Brühzylinders 14 sind mehrere, beispielsweise acht Spülkanäle 25 angeordnet, die jedoch in der hier beschriebenen ersten Reinigungsphase, der Spülphase, durch den Brühkolben 26 abgedeckt sind, wie das auch beim Brühen des Kaffees der Fall ist. An der Führung 27 für den Brühkolben 26 ist im Bereich des zweiten Ansatzteiles 16 des Brühzylinders 14 ein schräg verlaufender Ansatz 28 und ein daran anschliessender, parallel zur Führung für den Brühkolben verlaufender Fortsatz 29 vorgesehen, welche einen Vorsprung bilden. Die Funktion dieses Ansatzes 28 wird bei der zweiten Phase des Reinigungsvorganges beschrieben.

Um einen Drehpunkt 30 ist ein Hebel 31 zur Verschwenkung des Brühzylinders 14 drehbar gelagert. Im Bereich dieses Hebels sind auch nicht näher dargestellte Ausstossmittel 37 zur Bewegung des Ausstosskolbens 19 nach oben im Brühzylinder 14 vorgesehen.

Der Weg des Spülwassers ist durch Pfeile dargestellt.

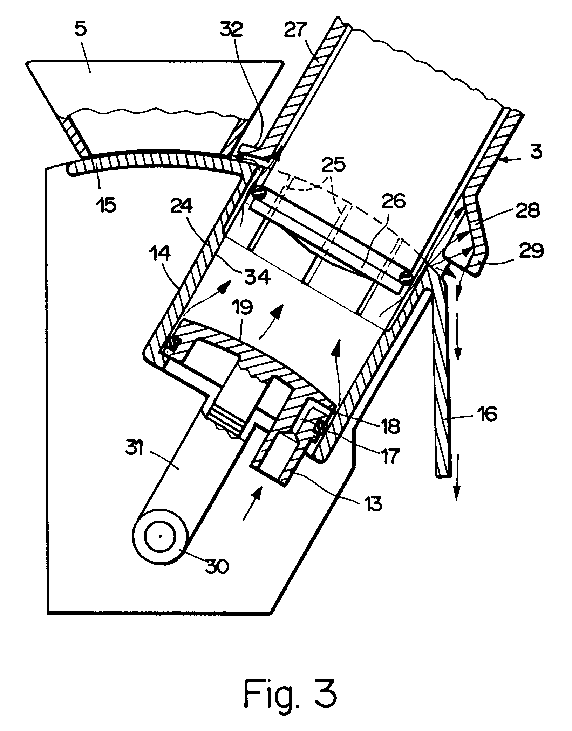

Fig. 3 zeigt die Brühvorrichtung in Reinigungsposition, welche die zweite Phase des Reinigungsverfahrens darstellt. Das Reinigungswasser fliesst wiederum durch den Wasseranschluss 13 und durch den Kanal 17 in den Ringbereich 18 des Ausstosskolbens 19 und von dort durch die Spülkanäle 25 in der Wand 24 des Brühzylinders 14 in den Bereich ausserhalb des Brühzylinders. Der Brühkolben 26 gibt die Kanäle 25, die als Rillen in der Innenwand 34 des Brühzylinders ausgebildet sind, im unteren Breich frei. Das Reinigungswasser spritzt an den schrägen Ansatz 28 der Führung 27 für den Brühkolben und gelangt von dort auf den zweiten Ansatzteil 16 und reinigt denselben von den Tresterresten. Im weiteren spritzt das durch die Spülkanäle 25 austretende Reinigungswasser zwischen dem unteren abgewinkelten Teil 32 der Führung 27 für den Brühkolben 26 und dem ersten Ansatzteil 15 des Brühzylinders 14 hindurch. Zusätzlich wird Wasser zwischen der Innenwand der Führung 27 für den Brühkolben und dem Brühkolben 26 hindurch nach oben gemäss Fig. 3 gespritzt. Dank dem Strahleffekt des durch die Spülkanäle austretenden Reinigungswassers werden Tresterteile fortgeschwemmt. Die Spülkanäle oder Rillen 25 können asymmetrisch angeordnet und in der Grösse verschieden voneinander ausgebildet sein. Der Weg des Spülwassers ist wiederum durch Pfeile angegeben.

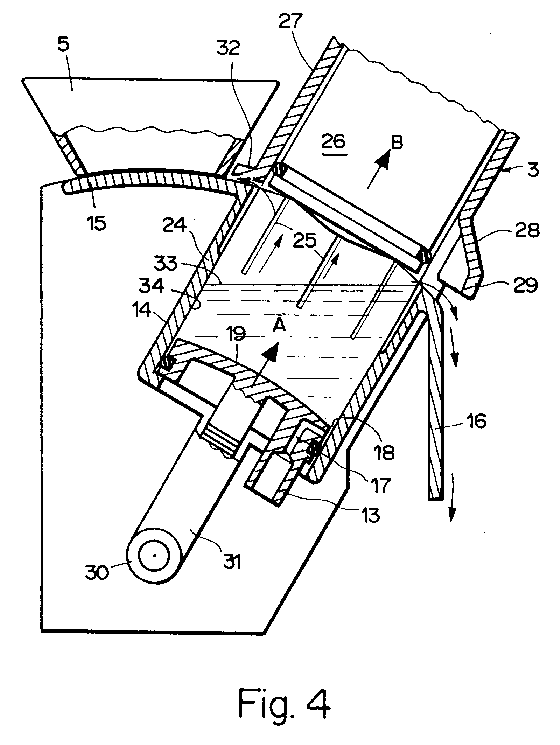

In Fig. 4 ist der Flutvorgang, die dritte Phase der Reinigung, dargestellt. Der Brühkolben 26 befindet sich in einer weiter nach oben zurückgezogenen Lage als bei den Phasen gemäss den Fig. 2 und 3. Der Brühzylinder 14 wird über den Wasseranschluss 13 bis zum maximal möglichen Wasserstand gefüllt. In der Folge der schrägen Lage des Brühzylinders verläuft dabei die Wasseroberfläche 33 schräg zur Wand 24 des Brühzylinders. Beim Flutvorgang wird der Ausstosskolben 19 in Richtung des Pfeiles A nach oben gestossen und der Brühkolben 26 in Richtung des Pfeiles B etwas nach oben in die gezeigte Position verschoben, so dass das Wasser aus dem Brühzylinder 14 oben rundherum ausfliesst. Das Wasser fliesst in Richtung der Pfeile zwischen dem Ansatz 28 und dem zweiten Ansatzteil 16 nach unten und zwischen dem unten abgewinkelten Teil 32 der Führung 27 für den Brühkolben und dem ersten Ansatzteil 15 in Richtung des Trichters 5. Das überschwappende Wasser schwemmt Tresterteile mit. Die verschiedenen Reinigungsphasen werden durch eine in der Kaffeemaschine angeordnete Steuerelektronik ausgelöst, welche durch die Bedienungseinheit 12 in Betrieb gesetzt wird.

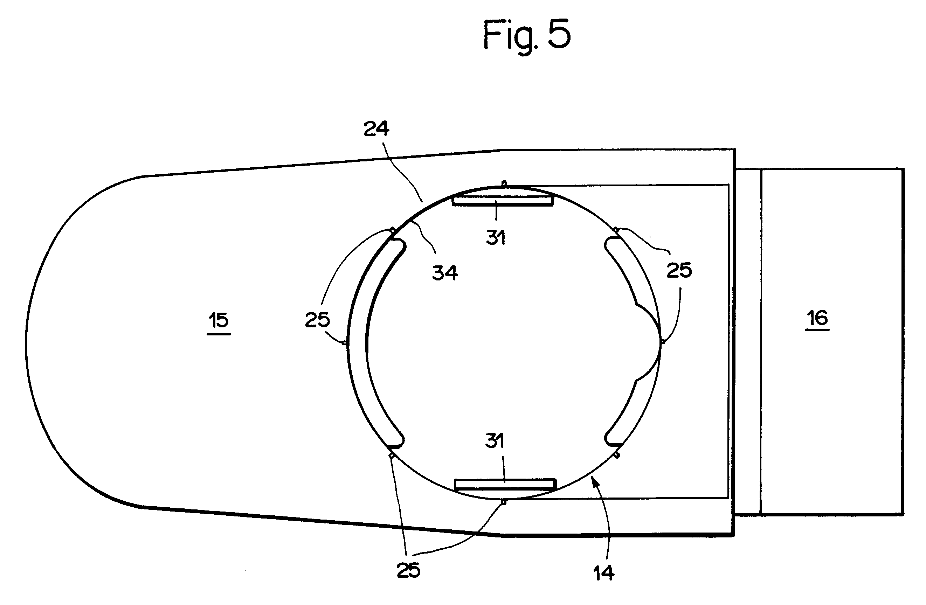

In Fig. 5 ist eine Draufsicht auf den Brühzylinder 14 mit dem ersten und zweiten Ansatzteil 15 und 16 dargestellt. Die Spülkanäle sind als an der Innenwand 34 des Brühzylinders angeordnete Rillen 25 ausgebildet. Die Spülkanäle sind gemäss Fig. 5 symmetrisch angeordnet; sie könnten jedoch auch asymmetrisch angeordnet sein.

Als weitere, vierte Reinigungsphase kann eine chemische und/oder biologische Reinigung vorgenommen werden. Zu diesem Zweck wird der Brühzylinder 14 in die Mahlposition unter den Trichter 5 verschwenkt, wobei durch den Pulverschacht ein Reinigungsmittel in Tabletten-, Pulver- oder flüssiger Form in den Brühzylinder eingeworfen wird. Danach wird der Brühzylinder wieder in seine Spülposition gemäss Fig. 2 verschwenkt. Nachdem die Pumpe Wasser in den Brühzylinder gefördert hat, wirkt das Reinigungsmittel während einiger Zeit ein. Der Spülprozess wird vorzugsweise einige Male wiederholt. Das Reinigungsmittel kann auch aus einem nicht dargestellten Reinigungsmitteltank, oder aus dem Wassertank, oder aus einer Kartusche, via Ventil-Pumpe-Durchlauferhitzer-Brühzylinder eingebracht werden. Nach der vierten Phase der chemischen und/oder biologischen Reinigung werden durch den Ausstosskolben 19 in einer fünften Phase allfällige Resten des Reinigungsmittels ausgestossen. Der Brühkolben fährt dabei nach oben in die Position gemäss Fig. 4.

An die fünfte schliesst sich eine sechste Phase der Spülung an. Die Brühvorrichtung verbleibt in der Position gemäss Fig. 2, wobei die Pumpe Wasser durch das System fördert und es vom Reinigungsmittel freispült. Der Brühzylinder fährt in die Mahlposition. Gleichzeitig wird der Benutzer auf die Entleerung der Auffangschale 11 aufmerksam gemacht.

Die erste Reinigungsphase gemäss der Beschreibung wird in den Ansprüchen mit A, die zweite Reinigungsphase mit B, die dritte Phase mit C, die vierte Phase mit D, die fünfte Phase mit E und die sechste Phase mit F bezeichnet.

Bei einer nicht dargestellten Ausführungsform wird das Wasser zur Reinigung einem an der Kaffeemaschine angeordneten Frischwasseranschluss entnommen.

Die einzelnen Reinigungsphasen resp. Schritte des Verfahrens könnten auch in anderer Reihenfolge ablaufen, wobei eine oder mehrere Phasen ausgelassen oder wiederholt werden könnten.

## Patentansprüche

1. Verfahren zur Reinigung einer Brühvorrichtung, insbesondere einer Kaffeemaschine, wobei für den Reinigungsvorgang Wasser von einem Wasserbehälter (6) oder von einem externen Wasseranschluss über eine Zuführungsleitung (35) dem Wasseranschluss (13) eines Brühzylinders (14) zugeführt wird, dadurch gekennzeichnet, daß in mindestens einer Reinigungsphase (B) Wasser durch Organe (25) vom Brühzylinder (14) in Bereiche ausserhalb des Brühzylinders (14) geleitet wird.

2. Verfahren nach Patentanspruch 1, dadurch gekennzeichnet, dass in einer Phase (A) das Wasser über den Wasseranschluss (13) in den Brühzylinder (14) und von diesem über eine Abflussleitung (22) in einem Brühkolben (26) zu einem externen Wasserbehälter (23) geleitet wird, wobei der Brühkolben (26) die Organe (25) überdeckt.

3. Verfahren nach einem der vorangehenden Patentansprüche, dadurch gekennzeichnet, dass in einer Phase (C) das im Brühzylinder (14) befindliche Wasser durch den angehobenen Ausstosskolben (19) und den gleichzeitig zurückgezogenen Brühkolben (26) über den Rand des Brühzylinders (14) ausfliesst.

4. Verfahren nach einem der vorangehenden Patentansprüche, dadurch gekennzeichnet, dass in der Phase (B) oder (C) das Wasser auf einen Ansatzteil (16) des Brühzylinders (14) zur Reinigung desselben geleitet wird.

5. Verfahren nach einem der vorangehenden Patentansprüche, dadurch gekennzeichnet, dass in einer Phase (D) ein chemischer und/oder biologischer Reinigungsprozess stattfindet.

6. Verfahren nach einem der vorangehenden Patentansprüche, dadurch gekennzeichnet, dass in einer Phase (E) allfällige Reste des Reinigungsmittels ausgestossen werden.

7. Verfahren nach einem der vorangehenden Patentansprüche, dadurch gekennzeichnet, dass in einer Phase (F) eine Spülung stattfindet.

8. Verfahren nach einem der vorangehenden Patentansprüche, dadurch gekennzeichnet, dass die einzelnen Reinigungsphasen (A - F) in beliebigier Reihenfolge durchgeführt und wiederholt werden können.

9. Reinigungsanordnung für eine Brühvorrichtung (3), insbesondere einer Kaffeemaschine (1), zur Durchführung des Verfahrens nach einem der vorangehenden Patentansprüche, mit einem Wasserbehälter (1) oder einem externen Wasseranschluss und einer Zuleitung (35) für das Wasser zum Wasseranschluss (13) eines Brühzylinders (14), gekennzeichnet durch Organe (25) zur Leitung des Reinigungswassers vom Brühzylinder (14) in Bereiche ausserhalb des Brühzylinders.

10. Reinigungsanordnung nach Patentanspruch 9, dadurch gekennzeichnet, dass die Organe (25) als an der Innenfläche (34) der Wand (24) des Brühzylinders (14) angeordnete Rillen oder Kanäle ausgebildet sind.

11. Reinigungsanordnung nach Patentanspruch 9 oder 10, dadurch gekennzeichnet, dass die Organe (25) parallel zur Mittelachse des Brühzylinders (14) verlaufen.

12. Reinigungsanordnung nach einem der Patentansprüche 9 bis 11, dadurch gekennzeichnet, dass in der Führung (27) für den Brühkolben (26) benachbart dem zweiten Ansatzteil (16) des Brühzylinders (14) ein Ansatz (28, 29) zur Leitung des Spülwassers auf den Ansatzteil (16) vorgesehen ist.

13. Reinigungsanordnung nach einem der Patentansprüche 9 bis 12, dadurch gekennzeichnet, dass die Organe (25) asymmetrsich angeordnet sind.

14. Reinigungsanordnung nach einem der Patentansprüche 9 bis 13, dadurch gekennzeichnet, dass die Organe (25) eine voneinander verschiedene Grösse aufweisen.

## Claims

1. Method of cleaning a brewing device, especially of a coffee machine, water being conducted for the cleaning process from a water tank (6) or from an external water supply via a supply line (35) to the water supply connection (13) of a brewing cylinder (14), characterised in that in at least one cleaning phase (B) water is conducted through the elements (25) of the brewing cylinder (14) into areas outside the brewing cylinder (14).

2. Method according to claim 1, characterised in that in one phase (A) the water is conducted via a water supply connection (13) into the brewing cylinder (14) and from there via an outlet pipe (22) in a brewing piston (26) to an external water tank (23), the brewing piston (26) covering up the elements (25).

3. Method according to one of the preceding claims, characterised in that in one phase (C) the water located in the brewing cylinder (14) flows out over the edge of the brewing cylinder (14) by means of the raised ejection piston (19) and the simultaneously retracted brewing piston (26).

4. Method according to one of the preceding claims, characterised in that in phase (B) or (C) the water is led to an extension piece (16) of the brewing cylinder (14) for cleaning of the same.

5. Method according to one of the preceding claims, characterised in that in one phase (D) a chemical and/or biological cleaning process takes place.

6. Method according to one of the preceding claims, characterised in that in one phase (E) any residue of the cleaning agent is expelled.

7. Method according to one of the preceding claims, characterised in that in one phase (F) rinsing takes place.

8. Method according to one of the preceding claims, characterised in that the individual cleaning phases (A - F) can be carried out in any desired order and can be repeated.

9. Cleaning configuration for a brewing device (3), especially of a coffee machine (1), for carrying out the method according to one of the preceding claims, with a water tank (1) or an external water supply connection and a supply pipe (35) to feed the water to the water supply connection (13) of a brewing cylinder (14), characterised by elements (25) for conducting the cleaning water from the brewing cylinder (14) into areas outside the brewing cylinder.

10. Cleaning configuration according to claim 9, characterised in that the elements (25) are designed as grooves or channels on the inner surface (34) of the wall (24) of the brewing cylinder (14).

11. Cleaning configuration according to claim 9 or 10, characterised in that the elements (25) run parallel to the central axis of the brewing cylinder (14).

12. Cleaning configuration according to one of the claims 9 to 11, characterised in that, in the guide (27) for the brewing piston (26), adjacent to the second extension piece (16) of the brewing cylinder (14), a projection (28, 29) is provided for conducting the rinse water to the extension piece (16).

13. Cleaning configuration according to one of the claims 9 to 12, characterised in that the elements (25) are disposed asymmetrically.

14. Cleaning configuration according to one of the claims 9 to 13, characterised in that the elements (25) are of differing size.

## Revendications

1. Procédé de nettoyage d'un dispositif d'infusion, en particulier pour une machine à café, dans lequel pour le processus de nettoyage on amène de l'eau depuis un récipient d'eau (6) ou une prise d'eau externe, à la prise d'eau (13) d'un cylindre d'infusion (14) à travers une conduite d'amenée (35), caractérisé en ce que, au moins dans une phase de nettoyage (B) l'eau est conduite par des organes (25) depuis le cylindre d'infusion (14) dans des zones se trouvant en dehors du cylindre d'infusion (14).

2. Procédé selon la revendication 1, caractérisé en ce que dans une phase (A) l'eau est amenée dans le cylindre d'infusion (14) par la prise d'eau (13) et depuis celui-ci à un récipient d'eau externe à travers une conduite d'écoulement (22) dans un piston d'infusion (26), le piston d'infusion (26) recouvrant les organes (25).

3. Procédé selon l'une des revendications précédentes, caractérisé en ce que dans une phase (C) l'eau se trouvant dans le cylindre d'infusion (14) coule par le piston d'éjection relevé (19) et le piston d'infusion (26) simultanément retiré par dessus le bord du cylindre d'infusion (14).

4. Procédé selon l'une des revendications précédentes, caractérisé en ce que dans la phase (B) ou (C) l'eau est amenée sur un prolongement (16) du cylindre d'infusion (14) pour nettoyer ce dernier.

5. Procédé selon l'une des revendications précédentes, caractérisé en ce que dans une phase (D) intervient un processus de nettoyage chimique et/ou biologique.

6. Procédé selon l'une des revendications précédentes, caractérisé en ce que dans une phase (E) tout résidu éventuel de produit de nettoyage est évacué.

7. Procédé selon l'une des revendications précédentes, caractérisé en ce que dans une phase (F) intervient un rinçage.

8. Procédé selon l'une des revendications précédentes, caractérisé en ce que chacune des phases de nettoyage (A-F) peut être exécutée dans un ordre quelconque et peut être répétée.

9. Dispositif de nettoyage d'un dispositif d'infusion, en particulier pour une machine à café (1) pour la mise en oeuvre du procédé selon l'une des revendications précédentes, comprenant un récipient d'eau (1) ou une prise d'eau externe et une conduite d'amenée (35) d'eau vers la prise d'eau (13) d'un cylindre d'infusion (14), caractérisé par des organes (25) pour conduire l'eau de nettoyage depuis le cylindre d'infusion (14) dans des zones en dehors du cylindre d'infusion.

10. Dispositif de nettoyage selon la revendication 9, caractérisé en ce que les organes (25) sont configurés en rainures ou canaux disposés à la surface interne (34) de la paroi (24) du cylindre d'lnfusion (14).

11. Dispositif de nettoyage selon la revendication 9 ou 10, caractérisé en ce que les organes (25) sont disposés parallèlement à l'axe central du cylindre d'infusion (14).

12. Dispositif de nettoyage selon l'une des revendications 9 à 11, caractérisé en ce que dans la conduite (27) pour le piston d'infusion (26) avoisinant le deuxième prolongement (16) du cylindre d'infusion (14) est prévu un raccord (28, 29) pour conduire l'eau de rinçage au prolongement (16).

13. Dispositif de nettoyage selon l'une des revendications 9 à 12, caractérisé en ce que les organes (25) sont disposés de manière asymétrique.

14. Dispositif de nettoyage selon l'une des revendications 9 à 13, caractérisé en ce que les organes (25) présentent des grandeurs qui diffèrent les unes des autres.
